# EUROPÄISCHE PATENTSCHRIFT

(11) **EP 1 978 534 B1**
(45) Veröffentlichungstag und Bekanntmachung des Hinweises auf die Patenterteilung: **01.06.2011**
(21) Anmeldenummer: 08102700.5
(22) Anmeldetag: 18.03.2008
(51) Int. Cl.: H01H 13/14, H01H 13/705

(54) **Tastatur für ein Haushaltgerät und Verfahren für deren Einbau**
Keyboard for a household appliance and method for its installation
Clavier pour un appareil ménager et son procédé d'encastrement

(30) Priorität: 04.04.2007 ES 200701016
(43) Veröffentlichungstag der Anmeldung: 08.10.2008
(73) Patentinhaber: BSH Bosch und Siemens Hausgeräte GmbH, 81739 München (DE)
(72) Erfinder: Galindo Perez, Juan Jose, 50007, Zaragoza (ES)

(56) Entgegenhaltungen:
- EP-A- 0 435 131
- DE-A1- 10 057 402
- DE-C1- 10 250 497
- US-A- 5 921 381

## Beschreibung

### TECHNISCHES GEBIET DER ERFINDUNG

Die vorliegende Erfindung betrifft eine Tastatur für ein Gerät, insbesondere ein Haushaltsgerät, mit mindestens einem Steuerelement, das in einer vorbestimmten Position des Steuerelements angeordnet ist. Die Tastatur weist mindestens einen Knopf, der zum Betätigen des Steuerelementes geeignet ist, einen Rahmen, in dem der Knopf verschiebbar in einer vorbestimmten Position des Knopfes vorsehbar ist, und ein Sperrelement auf. Außerdem betrifft die Erfindung ein Verfahren zum Einbau der Tastatur in Haushaltsgeräten.

### STAND DER TECHNIK

Fast alle Geräte, die nach dem Stand der Technik vorliegen, weisen Steuerelemente auf, die vom Nutzer zu betätigen sind, um deren funktionsseitige Wirkung zu erreichen.

Bei der Fertigung der Schaltfelder der Geräte zum Betätigen der Steuerelemente werden auf der Vorderseite Knöpfe angeordnet. Die Knöpfe können u.a. in der Art von Druck-, Dreh-, Kipp- und Schiebeknöpfen sein.

Insbesondere bei der Fertigung von Haushaltsgeräten ist es höchst üblich, dass dasselbe Gerät mit verschiedenen Funktionalitäten hergestellt wird. Der hochwertige Bereich weist eine höhere Anzahl an Funktionen und Steuerelementen, letztendlich Betätigungsknöpfen der Steuerelemente, auf als die Haushaltsgeräte des preisgünstigeren Bereiches.

Demzufolge ist es notwendig, dass die Geräte des hochwertigen Bereiches mehr Knöpfe aufweisen, um die Steuerelemente zu steuern, als die des preisgünstigeren Bereiches, weshalb die Schalttafel oder das Schaltgehäuse mit Öffnungen versehen sein muss, um zu den Steuerknöpfen der Steuerelemente Zugriff zu haben. Diese Knöpfe sind Bestandteil einer Tastatur, die in dem Gerät eingebaut wird.

Eine Form, die die Hersteller von Haushaltgeräten bei der Fertigung des Produktes zur Kostensenkung haben, ist die Herstellung eines einzigen Bedienfeldes für alle Qualitätsbereiche desselben Produktes mit allen erforderlichen Öffnungen und Zugriffen der Knöpfe der Tastaturen des Gerätes, die vorher bei der Herstellung der Vorderseite gefertigt werden.

Diese gleiche Vorderseite des Bedienfeldes kann für ein Haushaltsgerät des niedrigsten Qualitätsbereiches mit einer geringeren Anzahl an Steuerelementen und folglich einer geringeren Anzahl an Funktionalitäten des Gerätes verwendet werden. Deshalb wird dieses Gerät des niedrigsten Qualitätsbereiches über weniger Knöpfe zur Betätigung der Steuerelemente verfügen. So verbleiben auf der Vorderseite des Bedienfeldes Öffnungen, die geschlossen werden müssen. Im Stand der Technik werden diese Öffnungen mit Abdeckungen bedeckt, die in die Öffnungen eingefügt werden. Die Befestigung kann durch Kleben, Klammern, Schrauben oder jede beliebige andere Form erfolgen.

Aus der DE 100 57 402 A1, der DE 102 52 497 C1, der US 5,921,381 A und der EP 0 435 131 A sind Tastaturen bekannt, die für ein Haushaltsgerät konzipiert sind. Die Tastaturen weisen jeweils zumindest ein Steuerelement auf, dass in einer vorbestimmten Position angeordnet ist. Darüber hinaus umfasst die Tastatur einen Knopf, der zum Betätigen des Steuerelements ausgebildet ist. Darüber hinaus ist ein Rahmen vorgesehen, in dem der Knopf verschiebbar in einer vorbestimmten Position des Knopfs vorsehbar ist. Darüber hinaus sind jeweils Sperrelemente optional zum permanenten Sperren der Verschiebbarkeit des Knopfs in einem Zustand, in dem die Tastatur an einem Gerät angebracht ist und die Position des Steuerelements und die Position des Knopfs voneinander abweichen oder eine Funktion des Steuerelements mittels des Knopfs ausgeschlossen muss sein, bekannt. Optional kann ein Sperrelement vorgesehen sein, welches permanent zum Ermöglichen der Verschiebbarkeit des Knopfs in einem Zustand, in dem die Tastatur an dem Gerät angebracht ist und die Position des Steuerelements und die Position des Knopfs einander entsprechen und eine Funktion des Steuerelements mittels des Knopfs ermöglicht sein muss, ausgebildet ist.

### BESCHREIBUNG DER ERFINDUNG

Aufgabe der Erfindung ist demzufolge, eine Tastatur für ein Gerät mit größerer Wandlungsfähigkeit, Leichtigkeit der Montage in das Gerät und mit geringeren finanziellen Kosten als die Tastaturen des heutigen Standes der Technik sowie ein Verfahren zur Verfügung zu stellen.

Gemäß einem ersten Aspekt der Erfindung wird diese Aufgabe durch eine Tastatur gemäß Anspruch 1.

Dieselbe Tastatur kann in verschiedenen Geräten eingebaut werden, je nach der Notwendigkeit, ob ein Steuerelement des Gerätes aktiviert werden soll oder ein Steuerelement vorliegt, das durch den Knopf aktiviert wird, ohne ein anderes Element zum Verschließen der Öffnung, die durch den Knopf entstanden ist, zu verwenden. In dem Fall, in dem es nicht notwendig ist, dass der Knopf das Steuerelement des Gerätes aktiviert, blockiert das Sperrelement die Bewegung des Knopfes und somit übernimmt derselbe Knopf der Tastatur die Abdeckfunktion zum Verschließen der Öffnung des Knopfes oder für den Fall, dass das Steuerelement aktiviert werden soll, ist das Sperrelement nicht aktiviert und lässt der Bewegung des Knopfes zu dessen Verstellung freien Raum. Das Sperrelement kann in jeder beliebigen Art und Weise wirksam gemacht werden, beispielsweise, durch Verkleben, durch Klammern, durch Vibrationsschweißen, Gießschweißen, Heizelementschweißen, Ultraschallschweißen und/oder Festschrauben.

Der Knopf ist ein Knopf, der aus einer Gruppe von Knöpfen gewählt wird, mit:
Druckknöpfen, Schiebeknöpfen und Drehknöpfen, weil eine Tastatur in einem Gerät einen oder mehrere dieser Knopfarten aufweisen kann, die gesperrt werden können oder müssen, da sie kein Steuerelement auslösen.

In einer Ausführung ist der Knopf im Rahmen drehbar befestigt, was diesem einen Stützpunkt hinsichtlich des Rahmens der Tastatur gibt und seine Betätigungsbewegung demzufolge eine Umdrehung bezüglich einer Drehachse des Rahmens ist.

Der Rahmen weist einen Rahmenrand auf und der Knopf weist einen Knopfstützvorsprung auf, der auf dem Rahmenrand in einer Ruheposition des Knopfes ruhen kann, um den Knopf in dem Rahmen aufzunehmen. Dies stellt eine Ruheposition des Knopfes in dem Rahmen sicher und dass er keine unerwünschten Bewegungen bezüglich des Rahmens aufnimmt.

In einer Ausführung weist der Rahmen ein Rahmenfenster auf, um ein Steuerelementendisplay zu arretieren. Für den Fall, dass das Steuerelement beispielsweise seinen Funktionszustand oder jede andere beliebige Information anzeigen soll, kann das mit Hilfe des Displays erfolgen, das in jeder beliebigen Art und Weise arretiert, angebracht oder befestigt ist, durch Ankleben, durch Vibrationsschweißen, Gießschweißen, Heizelementschweißen, Ultraschallschweißen und/oder Anschrauben an ein Rahmenfenster jeder beliebigen geometrischen Form, die aus einem Stück besteht oder mit dem Rahmen verbunden ist.

In einer Ausführung ist das Sperrelement in dem Rahmen und/oder in dem Knopf angeordnet. In einer Weise, in der der eine mit dem anderen verbunden ist, oder wo das relative Verschieben zwischen beiden verhindert ist, damit sich der Knopf nicht bewegt, auch wenn er vom Nutzer gedrückt werden sollte.

Das Sperrelement ist an der Rahmenrückseite und/oder der Knopfrückseite angeordnet, wobei es zum Innenbereich des Gerätes gerichtet ist und für den Nutzer unsichtbar ist.

Das Sperrelement ist auf der einer Knopfdrehachse gegenüberliegenden Seite angeordnet, wobei die Rotation um die Achse blockiert ist.

Das Sperrelement ist ein einstückiges schmelzbares Teil des Rahmens und/oder des Knopfes. Diese Ausführungsform erlaubt die Aufnahme des Sperrelementes in den Rahmen und/oder Knopf, wobei die Anzahl der Teile reduziert wird. Die Schmelzform des Sperrelementes kann, unter anderem, das Vibrationsschweißen, Gießschweißen, Heizelementschweißen, Ultraschallschweißen sein.

Das Sperrelement erstreckt sich in einem geschmolzenen Zustand auf der Rückseite des Knopfes und auf der Rückseite des Rahmens. So wird die Bewegung durch das Schmelzen des einstückigen schmelzbaren Teiles des Rahmens und/oder des Knopfes mit einem leichten und schnellen Sperrsystem abgeblockt.

Das Sperrelement weist ein Sperrstück auf. Es ist ein Stück, das nicht zum Rahmen und/oder Knopf gehört, das das Abblocken der relativen Bewegung des Knopfes realisieren kann.

Das Sperrstück ist ein rahmenförmiges Sperrstück, das mit dem Rahmenfenster verbindbar ist. Die Verbindungsart zwischen beiden kann in jeder beliebigen Weise erfolgen, beispielsweise durch Kleben, mittels Klammern, durch Vibrationsschweißen, Gießschweißen, Heizelementschweißen, Ultraschallschweißen, Verschrauben, wobei die Öffnung beider vorzugsweise die gleiche Größe aufweist, damit die visuelle Erfassung der Informationen des Steuerelementes über das Display des Steuerelementes möglich ist.

Das rahmenförmige Sperrstück weist zumindest einen Sperrstückabschnitt auf, der von einem Sperrstücksrand des rahmenförmigen Sperrstücks vorsteht, um auf einem Knopfstützvorsprung zu ruhen, wodurch eine Knopfverschiebungsstrecke gesperrt ist. Da das Sperrstück auf dem Rahmenfenster arretiert wird, verhindert der Sperrstückabschnitt direkt die Bewegung des Knopfes.

Das Sperrelement erstreckt sich in einem geschmolzenen Zustand auf der Sperrstückrückseite. Es ist eine schnelle Art und Weise, durch das Schmelzen des Sperrelementes den Bewegungsweg des Knopfes abzublocken, wobei es mit der Rückseite des Knopfes verbunden wird.

Der Knopf und/oder der Rahmen und/oder das Sperrelement sind aus Kunststoff gefertigt. Es ist besonders vorteilhaft für die Herstellung dieser Art von Tastaturen und zum Blockieren des Knopfes durch ein schmelzbares Sperrelement, weil das Schmelzen des Kunststoffes bei relativ niedrigen Temperaturen durchgeführt werden kann und dabei eine sehr zuverlässige Blockierung erreicht wird.

Gemäß einem zweiten erfindungsgemäßen Aspekt wird diese Aufgabe durch ein Verfahren gemäß Anspruch 15.

Die Beweglichkeit des Knopfes ist permanent blockiert, wenn das Sperrelement geschmolzen ist. Diese Methode ist sehr schnell und zuverlässig. Das Sperrelement kann durch Wärme geschmolzen werden, die durch ein Schweißverfahren durch Vibration oder Reibung entsteht.

Die Beweglichkeit des Knopfes ist permanent blockiert, wenn das Sperrstück so an dem Rahmen befestigt ist, dass der Sperrabschnitt des Sperrstückes den Verstellungsweg des Knopfes blockiert, wobei das Sperrstück mit dem Rahmen oder mit dem Rahmenfenster, das gleichzeitig das Display des Steuerelementes arretiert, verbunden wird. Das Rahmenteil kann ebenfalls mit dem Rahmenfenster oder mit dem Rahmen durch Vibrationsschweißen verbunden werden. Wenn das Material, aus dem der Knopf, Rahmen und/oder Sperrstück gefertigt sind, Kunststoff ist, ist das Vibrationsschweißen ein sehr vorteilhaftes Verfahren.

### KURZE BESCHREIBUNG DER ZEICHNUNGEN

Die Figuren zeigen:
- Figur 1:: zeigt eine Explosionsperspektive einer Tastatur gemäß einer Ausführung der Erfindung, die von ihrer Rückseite aus gesehen wird.
- Figur 2:: zeigt eine Perspektive einer Tastatur gemäß einer Ausführung der Erfindung, die von ihrer Rückseite aus mit den auf den Achsen des Rahmens eingebauten Knöpfen gesehen wird.
- Figur 3:: zeigt eine Perspektive einer Tastatur gemäß einer Ausführung der Erfindung, die von ihrer Vorderseite aus gesehen wird.
- Figur 4:: zeigt einen Querschnitt einer Tastatur gemäß einer Ausführung der Erfindung mit dem nicht gesperrten Knopf in Kontakt mit einem Steuerelement.
- Figur 5:: zeigt einen Querschnitt einer Tastatur gemäß einer Ausführung der Erfindung mit dem blockierten Knopf.

### BESCHREIBUNG EINER BEVORZUGTEN AUSFÜHRUNG

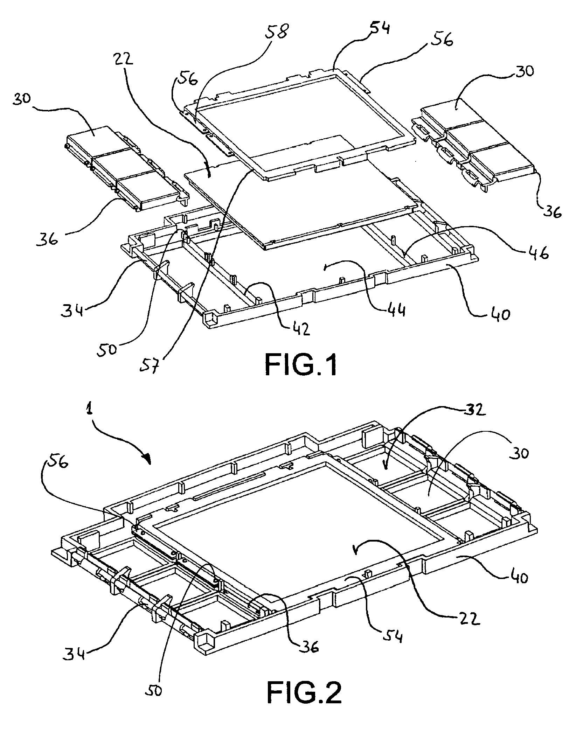

In Figur 1 wird eine Explosionsperspektive einer Tastatur 1 gemäß einer Ausführung der Erfindung gezeigt, die von ihrer Rückseite aus gesehen wird. Die Tastatur der Figur weist sechs Knöpfe 30 zum Betätigen der Steuerelemente 20 auf. Die Knöpfe 30 werden befestigt und drehen sich um Rotationsachsen der Knöpfe 34, die auf dem Rahmen 40 jeweils in einer Dreiergruppe auf jeder Seite eines Rahmenfensters 44 angeordnet sind. Die Knöpfe 30 auf der gegenüberliegenden Seite der Rotationsachse 34 weisen einen Knopfstützvorsprung 36 auf, um sich auf einem Rand des Rahmens 42 anzupassen, wenn sich der Knopf 30 aus seiner Einbauposition der Figur 1 um 180° in seine Funktionsposition der Figur 2 dreht.

Aus dem Rahmenrand 42 ragen einige Zapfen heraus, die die Sperrelemente 50 bilden. Die Knopfstützvorsprünge besitzen eine Auskehlung, die jeden Zapfen umgibt und dabei ganz in deren Nähe vorliegt, jedoch diese nicht berührt und dabei die freie Bewegung des Knopfes erlaubt.

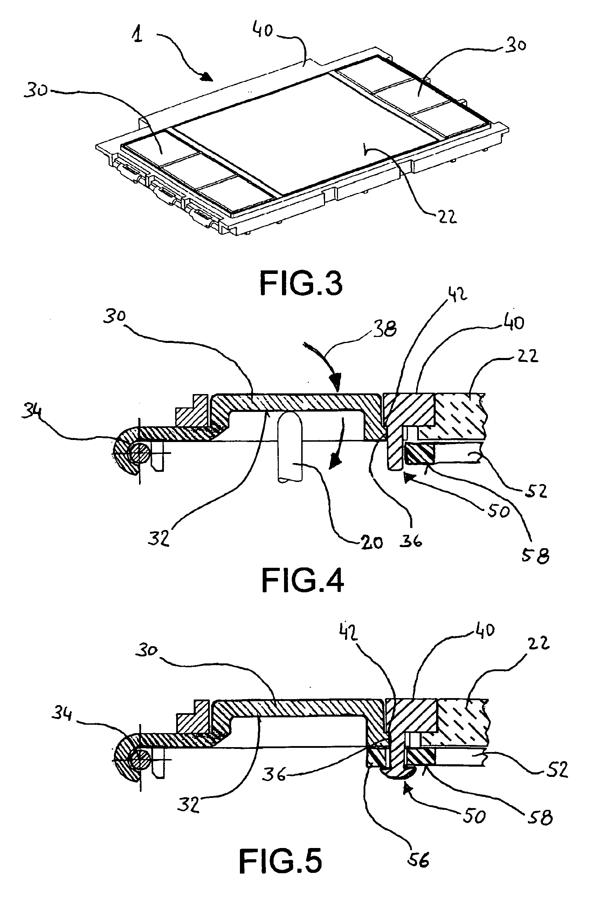

Auf dem Rahmenfenster 44 ist ein Steuerelementendisplay 22 angeordnet, um Zugang zur Information zu erhalten, die durch die Steuerelemente oder Funktion des Gerätes dargestellt wird. Auf dem Display 22 ist ein Sperrstück in Form eines Rahmens 54 angeordnet, das den gesamten Umkreis des Fensters 44 bedeckt. Dieses Sperrstück in Rahmenform weist einen Sperrstückrand 57 auf, von dem aus drei Sperrstückabschnitte 56 herausragen, die sich in Flügelform parallel zum Fenster 44 in Richtung der Knöpfe anordnen, um drei Knöpfe 30 zu sperren. Jeder Sperrstückabschnitt 56 hat zwei Löcher, um die Zapfen der Sperrelemente 50 eintreten zu lassen, die, sobald sich das Sperrstück in Rahmenform auf seinem Platz auf dem Display 22 befindet, aus den Löchern auf der Rückseite des Sperrstückes 58 herausragen. Die gesperrten Knöpfe würden so funktionieren, wie in der Fig. 5 gezeigt wird, und die drei nicht gesperrten gemäß Figur 4. Natürlich hängen die gesperrten und nicht gesperrten Knöpfe von den Steuerelementen des Gerätes ab; bei den hochwertigen könnten alle aktiviert werden und bei den preiswerteren könnten alle außer einem gesperrt sein.

In Figur 2 wird eine Perspektive der Tastatur 1 gemäß der erfindungsgemäßen Ausführung der Figur 1 gezeigt, die von ihrer Rückseite aus gesehen wird. Die Knöpfe 30 sind auf den Rahmenachsen 34 montiert und in ihre Funktionsposition gedreht. Das Display 22 ist auf dem rechteckigen Rahmenfenster 44 angeordnet, das es an seinen vier Seiten einschließt und das Sperrstück in Rahmenform 54 befindet sich auf dem Display 22, bildet ein Sandwich mit dem Display und arretiert es zuverlässig.

Vom Rand des Sperrstückes 57 ragen die drei Sperrstückabschnitte 56 hervor und liegen auf den Knopfstützvorsprüngen 34 auf, bilden dabei ein Sandwich mit ihnen gegen den Rahmenrand 42. Die Zapfen des Sperrelementes 50 werden von den Ausnehmungen umringt, die jeden Zapfen ganz nah umringen und ragen aus den Öffnungen auf der Rückseite des Sperrstückes 58 heraus.

Das Sperrstück in Rahmenform 54 ist durch das Vibrationsschweißverfahren mit dem Rahmen 40 verbunden worden und die Zapfen des Sperrelementes 50 wurden gleichzeitig geschmolzen und verbinden sich mit dem Sperrstück 54, wobei sie eine Arretierung und Sperrung der Knöpfe 30 bewirken. Die anderen drei Knöpfe verbleiben im nicht gesperrten Zustand und würden so funktionieren, wie in Figur 4 erläutert ist.

Figur 3 zeigt eine Perspektive einer Tastatur 1 gemäß der erfindungsgemäßen Ausführung der vorhergehenden Figuren, die von deren Vorderseite aus gesehen wird. Sowohl die Knöpfe 30 als auch der Rahmen 40 und das Display 22 sind aus ästhetischem Grund in einer gleichen Ebene abgeglichen.

Figur 4 zeigt einen Querschnitt einer Tastatur 1 gemäß der erfindungsgemäßen Ausführung der vorhergehenden Figuren mit dem nicht gesperrten Knopf 30 in Kontakt mit einem Steuerelement 20. Der Knopf ist in seiner Funktionsstellung an der Rotationsachse des Knopfes 34 eingerastet und an seiner entgegengesetzten Seite stützt er sich am Rahmenrand 42 durch den Knopfstützvorsprung 36 ab. Der Knopfstützvorsprung 36 weist eine Ausnehmung auf, die diesen umläuft und ganz nah am Zapfen des Sperrelementes 50 liegt, das nicht verformt ist, geht über die Rückseite des Sperrstückes 58 hinaus und erlaubt infolgedessen dem Knopf die freie Bewegung auf seinem Knopfverstellungsweg 38. Das Sperrelement 50 ist deaktiviert und Bestandteil eines Rahmenstückes 40, genauso wie die Rotationsachse des Knopfes 34. Auf dem Innenteil des Rahmens 40 stützt sich das Display des Steuerelementes 22 ab und bildet ein Sandwich mit diesem und, indem es arretiert wird, wird das Sperrstück 50 angeordnet, das die Form eines Rahmens haben kann oder ein Teil von ihm selbst sein kann. In dieser Ausführung kippt der Knopf um die Knopfrotationsachse 32 des Rahmens 40 und die Verbindung mit dem Steuerelement 20 wird durch einen Umschaltkontakt realisiert. Durch das Umschaltkontaktsystem werden die möglichen Abweichungen durch bestehende Toleranzen zwischen dem Knopf und dem Steuerelement aufgenommen, wobei deren Funktionalität sichergestellt wird.

Figur 5 zeigt einen Querschnitt einer Tastatur 1 gemäß der erfindungsgemäßen Ausführung der vorhergehenden Figuren mit dem bereits gesperrten Knopf 30, der kein Steuerelement zu aktivieren hat. Der Knopf ist in der Rotationsachse des Knopfes 34 eingerastet und auf der entgegengesetzten Seite stützt er sich am Rahmenrand 42 durch den Knopfstützvorsprung 36 ab. Der Knopfstützvorsprung 36 weist eine Ausnehmung auf, die ihn umkreist und ganz nah am Zapfen des Sperrelementes 50, das verformt ist, liegt und beim Durchqueren der Öffnung in dem Bereich des Sperrstückabschnittes 56 über die Rückseite des Sperrstückes 58 hinausragt, das den Knopfstützvorsprung 36 bedeckt, wobei es ein Sandwich mit ihm gegen den Rahmenrand 42 bildet und infolgedessen die Bewegung des Knopfes 30 definitiv blockiert. Das Sperrelement 50 ist Bestandteil eines Teils des Rahmens 40 und ist mit Hilfe des Schmelzverfahrens durch Vibrationsschweißen aktiviert worden.

In einer weiteren Ausführung, die nicht in den Figuren dargestellt wurde, könnte die Knopfsperrung ohne Sperrstück 52 und auch ohne Sperrstück in Rahmenform 54 realisiert werden. Man könnte einfach den Zapfen des Sperrelementes 50 auf dem Knopfstützvorsprung 36 verformen und dabei seine Bewegung blockieren. Die Ausnehmung des Knopfstützvorsprunges 36, die den Zapfen des Sperrelementes 50 umgibt, ist diesem sehr nahegelegen, umringt diesen größtenteils und wenn er durch Wärme verformt wird, bedeckt er die Rückseite des Knopfes 32. Das Display 22 in dieser Ausführung könnte mit dem Rahmenfenster durch Kleben oder Arretieren in jeder bekannten Weise oder auch durch Schmelzen eines Vorsprungs, der auf der Innenseite des Randes des Rahmenfensters angeordnet ist, mit dem selben Prozeß des Vibrationsschmelzens verbunden werden, wobei die Innenseite des Displays bedeckt wird und das Display auf dem Rahmenfenster in einer soliden und definitiven Position gesperrt wird.

Es ist außerdem vorgesehen, dass von der Rückseite des Knopfes elastische, in den Figuren nicht dargestellte Arme, die mit diesem eine Einheit bilden, herausragen, damit, wenn der Knopf in Funktionsstellung ist und von dem Nutzer gegen das Steuerelement gedrückt wird, die Arme eine Federkraft ausüben, um den Knopf wieder in seine Ausgangsposition zu bringen.

Mit einer einzigen Tastatur können alle Steuertafelvarianten aller Produktionsbereiche befriedigt werden, indem einfach nur Knöpfe gesperrt werden und die Graphik, die deren Funktionen anzeigt, geändert wird. Die Tastatur, die mehr als einen Knopf auf dem Rahmen aufweist, bietet einen einstückigen Verband, der durch ein für jeden Gerätetyp geeignetes Einbauverfahren einem so großen Bereich unterschiedlicher Geräte die geforderte Vielseitigkeit gibt. Dadurch, dass die Tastatur nur an einem Fenster, das in der Schalttafel vorliegt, zu befestigen ist, ist die Anpassung der Knöpfe an die Steuerelemente zuverlässiger, als wenn das Display und die Knöpfe jeder für sich zu befestigen sind.

### Liste der Bezugszeichen

Es bezeichnen:
- 1: Tastatur
- 20: Steuerelement
- 22: Display des Steuerelementes
- 30: Knopf
- 32: Rückseite des Knopfes
- 34: Rotationsachse des Knopfes
- 36: Knopfstützvorsprung
- 38: Knopfverschiebungsstrecke
- 40: Rahmen
- 42: Rahmenrand
- 44: Rahmenfenster
- 46: Rückseite des Rahmens
- 50: Sperrelement
- 52: Sperrstück
- 54: Sperrstück mit Rahmenform
- 56: Sperrstückabschnitt
- 58: Rückseite des Sperrstückes

## Patentansprüche

1. Tastatur (1) für ein Gerät, insbesondere ein Haushaltsgerät, mit mindestens einem Steuerelement (20), das in einer vorbestimmten Position des Steuerelements (20) angeordnet ist, wobei die Tastatur (1) Folgendes aufweist:
mindestens einen Knopf (30), der zum Betätigen des Steuerelements (20) geeignet ist;
einen Rahmen (40), in dem der Knopf (30) verschiebbar in einer vorbestimmten Position des Knopfs (30) vorsehbar ist;
und ein Sperrelement, das ein einstückiges schmelzbares Teil des Rahmens (40) und/oder des Knopfs (30) ist, wahlweise zum:
a) permanenten Sperren der Verschiebbarkeit des Knopfs (30) in einem Zustand, in dem
die Tastatur (1) in dem Gerät angebracht ist und die Position des Steuerelements (20) und die Position des Knopfs (30) voneinander abweichen oder eine Funktion des Steuerelements (20) mittels des Knopfs (30) ausgeschlossen sein muss; oder
b) permanenten Ermöglichen der Verschiebbarkeit des Knopfs (30) in einem Zustand, in dem
die Tastatur (1) in dem Gerät angebracht ist und die Position des Steuerelements (20) und die Position des Knopfs (30) einander entsprechen und eine Funktion des Steuerelements (20) mittels des Knopfs (30) ermöglicht sein muss, wobei der Knopf (30) in dem Rahmen (40) fixierbar schwenkbar ist,
**dadurch gekennzeichnet, dass**
dass Sperrelement so ausgebildet ist, dass die Verschiebbarkeit des Knopfs (30) durch Schmelzen des Sperrelements (50) permanent gesperrt wird.

2. Tastatur nach Anspruch 1,
**dadurch gekennzeichnet, dass**
der Knopf (30) ein Knopf (30) aus einer Gruppe von Knöpfen ist, die Folgendes umfasst: Druckknöpfe, Schiebeknöpfe und Drehknöpfe.

3. Tastatur nach einem der vorhergehenden Ansprüche,
**dadurch gekennzeichnet, dass**
der Rahmen (40) einen Rahmenrand (42) aufweist und der Knopf (30) einen Knopfstützvorsprung (36) aufweist, der auf dem Rahmenrand (42) in einer Ruheposition des Knopfs (30) ruhen kann, um den Knopf (30) in dem Rahmen (40) aufzunehmen.

4. Tastatur nach einem der vorhergehenden Ansprüche,
**dadurch gekennzeichnet, dass**
der Rahmen (40) ein Rahmenfenster (44) zum Halten eines Steuerelementdisplays (22) aufweist.

5. Tastatur nach einem der vorhergehenden Ansprüche,
**dadurch gekennzeichnet, dass**
das Sperrelement (50) in dem Rahmen (40) und/oder in dem Knopf angeordnet ist.

6. Tastatur nach einem der vorhergehenden Ansprüche,
**dadurch gekennzeichnet, dass**
das Sperrelement (50) an der Knopfrückseite (32) und/oder der Rahmenrückseite (46) angeordnet ist.

7. Tastatur nach einem der vorherigen Ansprüche,
**dadurch gekennzeichnet, dass**
das Sperrelement (50) im gegenüberliegenden Teil einer Knopfdrehachse (34) angeordnet ist.

8. Tastatur nach einem der vorhergehenden Ansprüche,
**dadurch gekennzeichnet, dass**
sich das Sperrelement (50) in einem geschmolzenen Zustand über die Knopfrückseite (32) und die Rahmenrückseite (46) erstreckt.

9. Tastatur nach einem der vorhergehenden Ansprüche,
**dadurch gekennzeichnet, dass**
das Sperrelement (50) ein Sperrstück (52) aufweist.

10. Tastatur nach Anspruch 9,
**dadurch gekennzeichnet, dass**
das Sperrstück (52) ein rahmenförmiges Sperrstück (54) ist.

11. Tastatur nach Anspruch 10,
**dadurch gekennzeichnet, dass**
das rahmenförmige Sperrstück (54) mit dem Rahmenfenster (44) verbindbar ist.

12. Tastatur nach einem der Ansprüche 10 oder 11,
**dadurch gekennzeichnet, dass**
das rahmenförmige Sperrstück (54) mindestens einen Sperrstückabschnitt (56) aufweist, der von einem Sperrstückrand (57) des rahmenförmigen Sperrstücks (54) vorsteht, um auf einem Knopfstützvorsprung (36) zu ruhen, wodurch eine Knopfverschiebungsstrecke (38) gesperrt ist.

13. Tastatur nach einem der Ansprüche 9 bis 12,
**dadurch gekennzeichnet, dass**
sich das Sperrelement (50) in einem geschmolzenen Zustand über die Sperrstückrückseite (58) erstreckt.

14. Tastatur nach einem der vorhergehenden Ansprüche,
**dadurch gekennzeichnet, dass**
der Knopf (30) und/oder der Rahmen (40) und/oder das Sperrelement (50) aus Kunststoff hergestellt sind.

15. Verfahren zum Einrichten einer Tastatur (1) nach einem oder mehreren der Ansprüche 1 bis 14 in Geräten, insbesondere Haushaltsgeräten, die Steuerelemente bzw. verschiedene Positionen darin aufweisen, folgende Schritte aufweisend:
a) beim Anbringen der Tastatur (1) in einem Gerät, bei dem die Position des Steuerelements (20) und die Position des Knopfs (30) voneinander abweichen oder eine Funktion des Steuerelements (20) mittels des Knopfs (30) ausgeschlossen sein muss: permanentes Sperren der Verschiebbarkeit des Knopfs (30) mittels des Sperrelements (50); und
b) beim Anbringen der Tastatur (1) in dem Gerät, bei dem die Position des Steuerelements (20) und die Position des Knopfs (30) einander entsprechen und eine Funktion des Steuerelements (20) mittels des Knopfs (30) ermöglicht sein muss: permanentes Ermöglichen der Verschiebbarkeit des Knopfs (30) mittels des Sperrelements (50) in einem nicht gesperrten Zustand.

16. Verfahren nach Anspruch 15 zum Einrichten einer Tastatur (1) nach Anspruch 12,
**dadurch gekennzeichnet, dass**
die Verschiebbarkeit des Knopfs (30) durch Schmelzen des Sperrelements (50) an den Rahmen (40) derart permanent gesperrt wird, dass der sperrabschnitt (56) des Sperrstücks (52) die Knopfverschiebungsstrecke (38) sperrt.

## Claims

1. Keyboard (1) for an appliance, particularly a domestic appliance, with at least one control element (20) which is arranged in a predetermined position of the control element (20), wherein the keyboard (1) comprises the following:
at least one button (30) suitable for actuation of the control element (20);
a frame (40), in which the button (30) can be provided to be displaceable into a predetermined position of the button (30); and
a blocking element which is an integral meltable part of the frame (40) and/or of the button (30) selectably for:
a) permanent blocking of the displaceability of the button (30) in a state in which the keyboard (1) is mounted in the appliance and the position of the control element (20) and the position of the button (30) differ from one another or a function of the control element (20) by means of the button (30) has to be excluded; or
b) permanent enabling of the displaceability of the button (30) in a state in which the keyboard (1) is mounted in the appliance and the position of the control element (20) and the position of the button (30) correspond with one another and a function of the control element (20) by means of the button (30) is to be enabled, wherein the button (30) is fixable in the frame (40) to be pivotable,
**characterised in that** the blocking element is so constructed that the displaceability of the button (30) is permanently blocked by melting the blocking element (50).

2. Keyboard according to claim 1, **characterised in that** the button (30) is a button (30) from a group of buttons comprising the following: press buttons, pushbuttons and rotary buttons.

3. Keyboard according to one of the preceding claims, **characterised in that** the frame (40) has a frame edge (42) and the button (30) has a button support projection (36), which can rest on the frame edge (42) in a rest position of the button (30), in order to mount the button (30) in the frame (40).

4. Keyboard according to any one of the preceding claims, **characterised in that** the frame (40) has a frame window (44) for holding a control element display (22).

5. Keyboard according to any one of the preceding claims, **characterised in that** the blocking element (50) is arranged in the frame (40) and/or in the button.

6. Keyboard according to any one of the preceding claims, **characterised in that** the blocking element (50) is arranged at the button rear side (32) and/or the frame rear side (46).

7. Keyboard according to any one of the preceding claims, **characterised in that** the blocking element (50) is arranged in the opposite part of a button rotational axis (34).

8. Keyboard according to any one of the preceding claims, **characterised in that** the blocking element (50) in a melted state extends beyond the button rear side (32) and the frame rear side (46).

9. Keyboard according to any one of the preceding claims, **characterised in that** the blocking element (50) comprises a blocking member (52).

10. Keyboard according to claim 9, **characterised in that** the blocking member (52) is a frame-shaped blocking member (54).

11. Keyboard according to claim 10, **characterised in that** the frame-shaped blocking member (54) is connectible with the frame window (44).

12. Keyboard according to one of claim 10 or 11, **characterised in that** the frame-shaped blocking member (54) has at least one blocking member section (56) which protrudes from a blocking member edge (57) of the frame-shaped blocking member (54) so as to rest on a blocking support projection (36), whereby a button displacement path (38) is blocked.

13. Keyboard according to any one of claims 9 to 12, **characterised in that** the blocking element (50) in a melted state extends beyond the blocking member rear side (58).

14. Keyboard according to any one of the preceding claims, **characterised in that** the button (30) and/or the frame (40) and/or the blocking element (50) is or are made of plastics material.

15. Method of equipping a keyboard (1) according to one or more of claims 1 to 4 in appliances, particularly domestic appliances, which have control elements or different positions therein, comprising the following steps:
a) on mounting of the keyboard (1) in an appliance, in which the position of the control element (20) and the position of the button (30) have to differ from one another or a function of the control element (20) by means of the button (30) has to be excluded: permanently blocking the displaceability of the button (30) by means of the blocking element (50); and
b) on mounting of the keyboard (1) in the appliance, in which the position of the control element (20) and the position of the button (30) correspond with one another and a function of the control element (20) by means of the button (30) has to be enabled: permanently enabling the displaceability of the button (30) by means of the blocking element (50) in a non-blocked state.

16. Method according to claim 15 for equipping a keyboard (1) according to claim 12, **characterised in that** the displaceability of the button (30) is permanently blocked by melting the blocking element (50) at the frame (40) in such a manner that the blocking section (56) of the blocking member (52) blocks the button displacement path (38).

## Revendications

1. Clavier (1) pour un appareil, en particulier un appareil ménager, comportant au moins un élément de commande (20), placé dans une position prédéterminée de l'élément de commande (20), ledit clavier (1) comprenant :
au moins un bouton (30), apte à actionner l'élément de commande (20) ;
un cadre (40), dans lequel le bouton (30) peut être prévu de manière déplaçable dans une position prédéterminée du bouton (30) ;
et un élément de blocage, qui est une partie fusible d'une seule pièce du cadre (40) et/ou du bouton (30), destiné au choix à :
a) bloquer en permanence la possibilité de déplacement du bouton (30) dans une situation dans laquelle
le clavier (1) est monté dans l'appareil et la position de l'élément de commande (20) et la position du bouton (30) diffèrent ou une fonction de l'élément de commande (20) au moyen du bouton (30) doit être exclue; ou
b) permettre en permanence la possibilité de déplacement du bouton (30) dans une situation dans laquelle
le clavier (1) est monté dans l'appareil et la position de l'élément de commande (20) et la position du bouton (30) correspondent et une fonction de l'élément de commande (20) au moyen du bouton (30) doit être permise, le bouton (30) étant apte à pivoter et être fixé dans le cadre (40),
**caractérisé en ce que**
ledit élément de blocage est conçu de façon à ce que la possibilité de déplacement du bouton (30) soit bloquée en permanence par fusion de l'élément de blocage (50).

2. Clavier selon la revendication 1,
**caractérisé en ce que**
le bouton (30) est un bouton (30) choisi dans un groupe de boutons comprenant : des boutons-poussoirs, des boutons coulissants et des boutons tournants.

3. Clavier selon l'une des revendications précédentes,
**caractérisé en ce que**
le cadre (40) comporte un bord (42) de cadre et le bouton (30) comporte une saillie d'appui (36) de bouton, susceptible de reposer sur ledit bord (42) de cadre dans une position de repos du bouton (30) pour recevoir le bouton (30) dans le cadre (40).

4. Clavier selon l'une des revendications précédentes,
**caractérisé en ce que**
le cadre (40) comporte une fenêtre (44) de cadre, destinée à tenir un écran (22) d'élément de commande.

5. Clavier selon l'une des revendications précédentes,
**caractérisé en ce que**
l'élément de blocage (50) est disposé dans le cadre (40) et/ou dans le bouton.

6. Clavier selon l'une des revendications précédentes,
**caractérisé en ce que**
l'élément de blocage (50) est disposé sur la face arrière (32) de bouton et/ou la face arrière (46) de cadre.

7. Clavier selon l'une des revendications précédentes,
**caractérisé en ce que**
l'élément de blocage (50) est disposé dans la partie opposée d'un axe de rotation (34) de bouton.

8. Clavier selon l'une des revendications précédentes,
**caractérisé en ce que**
l'élément de blocage (50), à l'état fondu, s'étend sur la face arrière (32) de bouton et la face arrière (46) de cadre.

9. Clavier selon l'une des revendications précédentes,
**caractérisé en ce que**
l'élément de blocage (50) comporte une pièce de blocage (52).

10. Clavier selon la revendication 9,
**caractérisé en ce que**
la pièce de blocage (52) est une pièce de blocage en forme de cadre (54).

11. Clavier selon la revendication 10,
**caractérisé en ce que**
la pièce de blocage en forme de cadre (54) est apte à être reliée à la fenêtre (44) de cadre.

12. Clavier selon l'une des revendications 10 ou 11,
**caractérisé en ce que**
la pièce de blocage en forme de cadre (54) comporte au moins une portion (56) de pièce de blocage, faisant saillie d'un bord (57) de pièce de blocage de la pièce de blocage en forme de cadre (54) de manière à reposer sur une saillie d'appui (36) de bouton, ce qui bloque un trajet de déplacement de bouton (38).

13. Clavier selon l'une des revendications 9 à 12,
**caractérisé en ce que**
l'élément de blocage (50), à l'état fondu, s'étend sur la face arrière (58) de pièce de blocage.

14. Clavier selon l'une des revendications précédentes,
**caractérisé en ce que**
le bouton (30) et/ou le cadre (40) et/ou l'élément de blocage (50) sont réalisés en matière plastique.

15. Procédé pour installer un clavier (1) selon l'une ou plusieurs des revendications 1 à 14 dans des appareils, en particulier des appareils ménagers, qui comportent des éléments de commande, respectivement des positions différentes dans ceux-ci, comprenant les étapes suivantes :
a) lors du montage du clavier (1) dans un appareil dans lequel la position de l'élément de commande (20) et la position du bouton (30) diffèrent ou une fonction de l'élément de commande (20) au moyen du bouton (30) doit être exclue :
blocage permanent de la possibilité de déplacement du bouton (30) au moyen de l'élément de blocage (50) ; et
b) lors du montage du clavier (1) dans l'appareil dans lequel la position de l'élément de commande (20) et la position du bouton (30) correspondent et une fonction de l'élément de commande (20) au moyen du bouton (30) doit être permise :
permission permanente de la possibilité de déplacement du bouton (30) au moyen de l'élément de blocage (50) à l'état non bloqué.

16. Procédé selon la revendication 15 pour installer un clavier (1) selon la revendication 12,
**caractérisé en ce que**
la possibilité de déplacement du bouton (30) est bloquée en permanence par fusion de l'élément de blocage (50) sur le cadre (40) de façon à ce que la portion de blocage (56) de la pièce de blocage (52) bloque le trajet de déplacement de bouton (38).
